# EUROPEAN PATENT APPLICATION

(11) **EP 4 506 568 A1**
(43) Date of publication of application: **12.02.2025**
(21) Application number: 24193520.4
(22) Date of filing: 08.08.2024
(51) Int. Cl.: F04D 1/06, F04D 13/02, F04D 13/06, F04D 13/08, F04D 29/60, F04D 29/62

(54) **DEVICE FOR MOVING LIQUIDS**

(30) Priority: 08.08.2023 IT 202300017001
(71) Applicant: Saber S.r.l., 33170 Pordenone (IT)
(72) Inventor: Bergamo, Stefano, 33170 Pordenone (IT)
(74) Representative: Petraz, Gilberto Luigi

(57) **Abstract**

Device (10) for moving liquids which includes a movement assembly (10a) comprising a drive unit (11) operatively connected to a hydraulic unit (12) configured to move the liquids.

## Description

### FIELD OF THE INVENTION

The present invention concerns movement devices for moving, pumping and/or circulating liquids, in particular cooling liquids or more generally other types of liquids to be moved. Possible applications include the beverage, food and chemical industries, and in general all fields in which there is a requirement to move liquids.

### BACKGROUND OF THE INVENTION

Movement devices for moving liquids are known, for example pumps for conveying a cooling liquid from a containing tank toward a user device to be cooled, such as a chiller for a beverage tapper or a machine tool. There are various types of known movement devices, based on different operating principles. For example, a centrifugal pump moves and pumps liquids thanks to a movement member, such as an impeller or a turbine, capable of achieving the desired movement or pumping through rotation. Therefore, when in operation, the centrifugal pump's movement member is in direct contact with the liquid to be moved. Generally, the centrifugal pump comprises at least one drive unit to make the movement member rotate. The rotation of the movement member puts the liquid under pressure, which is pushed toward one or more outlet ducts, or discharges, connected to a delivery circuit. Depending on the orientation of the axis of rotation, the centrifugal pump can be horizontal or vertical. Centrifugal pumps that operate in immersion or semi-immersion, in which at least the movement member is directly immersed in the tank containing the liquid to be moved or pumped, and centrifugal pumps in which the movement member is in indirect hydraulic communication with the tank containing the liquid to be moved, for example through a suitable duct, are known.

For example, a magnetic entrainment horizontal centrifugal pump provided with a drive unit and a hydraulic unit which comprises at least one movement member is known. The horizontal centrifugal pump is also provided with a support base to guarantee its stability in the installation position during operation. The horizontal centrifugal pump is supplied in a single piece, with the drive and hydraulic units already attached together, and already integrated with the support base.

A semi-immersion vertical centrifugal pump is also known, provided with a drive unit and a movement member which is supported by a sustaining element, called a shank, provided on the lower side of the drive unit and partly immersed in the liquid to be moved or pumped. The drive unit drives the movement member by means of a drive shaft at least partly inserted in the shank. This vertical centrifugal pump is also supplied in a single piece, with the drive unit and the shank already attached together.

A disadvantage of these devices for moving liquids is that their disassembly or assembly is complex for the end user, and inefficient and tedious for the manufacturer. As a result, any maintenance or repair operations are impossible, or possible only by disconnecting the entire liquid moving device from the tank containing the liquid to be cooled and from the delivery circuit, and the complete replacement of the device is preferable to replacing only the components to be repaired.

Another disadvantage of known devices for moving liquids is their overall size during transport, for example when being shipped to the manufacturer for maintenance, which involves high transport costs.

The overall size of the devices for moving liquids completely assembled in a single piece also represents a disadvantage for their storage.

Document US 2014/234141 A1 describes a magnetic-drive pump that can be divided into a pump unit and a drive motor unit.

Document US 4,403,923 A describes immersion pumps for moving liquids such as waste liquids and sewage. These pumps are housed in a pit and immersed in the liquid. In particular, these pumps provide a mean for rapidly and easily disengaging the working parts of the pump from the associated discharge pipe for maintenance and cleaning of the pump itself.

Document US 2021/123455 A1 describes a high power sanitary pump for suction and discharge of fluids through the rotational centrifugal force of an impeller.

Document US 4,049,364 A describes a centrifugal pump unit provided with a removable impeller unit for use in conjunction with ink tanks used in printing machines.

There is therefore the need to perfect a device for moving liquids that can overcome at least one of the disadvantages of the state of the art.

To do this, it is necessary to solve the technical problem of connecting the drive unit and the hydraulic unit of a device for moving liquids in a manner that can be easily released but has a strong and reliable seal.

In particular, one purpose of the present invention is to provide a device for moving liquids that can be easily and quickly disassembled and assembled, even by an end user.

Another purpose of the present invention is to provide a device for moving liquids suited to circular economy practices, such as the right of the manufacturer to repair or repurchase the used device when replacing it with a new model.

Another purpose of the present invention is to provide a device for moving liquids with a reduced overall size during transport and storage.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes and to resolve the technical problem described above in a new and original way, also achieving considerable advantages compared to the state of the prior art, a device for moving liquids according to the present invention comprises a movement assembly comprising a drive unit operatively connected to a hydraulic unit configured to move the liquids.

In accordance with one aspect of the present invention, the drive and hydraulic units comprise respective and mating first and second mechanical coupling means configured to achieve a reciprocal releasable coupling. This coupling is aimed at selectively connecting the drive and hydraulic units in a stable manner, thus forming the above mentioned movement assembly.

In accordance with another aspect of the present invention, the first and second mechanical coupling means are bayonet coupling means.

Doing so achieves the advantage of being able to rapidly connect or disconnect the drive unit and the hydraulic unit, without requiring any particular technical knowledge regarding the assembly of devices for moving liquids.

In accordance with another aspect of the present invention, the device for moving liquids is a horizontal centrifugal pumping device.

In accordance with another aspect of the present invention, the horizontal centrifugal pumping device comprises a support base configured to keep the movement assembly in a stable installation position.

In accordance with another aspect of the present invention, the support base comprises, on respective opposite sides thereof, positioning means and snap-in fastening means configured to create a stable and releasable attachment of the movement assembly in the above mentioned installation position.

In accordance with another aspect of the present invention, the positioning means are configured to engage a first attachment portion of the drive unit, and the snap-in fastening means are configured to fasten in a snap-in manner an opposing second attachment portion of the drive unit.

This has the additional advantage of being able to easily disconnect only the drive unit from the remaining parts of the device, in particular keeping the hydraulic unit connected to a suitable hydraulic circuit, or vice versa.

Consequently, any maintenance or replacement of the drive unit can be carried out without having to disconnect the hydraulic unit from the hydraulic circuit; vice versa, if intervening on the hydraulic unit, it is possible to disconnect the latter from the hydraulic circuit while leaving the drive unit installed.

In accordance with another aspect of the present invention, the hydraulic unit comprises outlet, pumping and inlet blocks attached to each other in an assembly configuration by means of releasable attachment means.

Advantageously, these releasable attachment means can be the same as each other, so that the hydraulic body can be dismantled with a single tool, simplifying and speeding up both the initial assembly of the device and also any subsequent maintenance.

Moreover, the pumping block can comprise one or more pumping stages. Advantageously, in the case of more than one pumping stage, the pumping stages can all be the same and therefore interchangeable and mountable in any order.

In accordance with another aspect of the present invention, the device for moving liquids is a magnetic entrainment centrifugal pumping device. In this case, the device comprises a motion transmission assembly which includes entrainment magnetic means and counter-means, which are operatively coupled to the drive unit on one side and to a movement member of the hydraulic unit on an opposite other side.

In accordance with another aspect of the present invention, the device for moving liquids is a vertical semi-immersion centrifugal movement or pumping device.

In accordance with another aspect of the present invention, the vertical semi-immersion centrifugal movement or pumping device comprises a motion transmission assembly provided with a drive shaft, configured to be at least partly inserted inside a shank of the device's hydraulic unit. The drive shaft is also operatively coupled to the device's drive unit on one side and to at least one movement member of the hydraulic unit on an opposite other side.

### DESCRIPTION OF THE DRAWINGS

These and other aspects, characteristics and advantages of the present invention will become apparent from the following description of some embodiments, given as a non-restrictive example with reference to the attached drawings wherein:
- figs. 1a-c are simplified perspective views of a first possible embodiment of a device for moving liquids according to the present invention, in particular fig. 1a shows a support base of the device, fig. 1b shows a drive unit and a hydraulic unit of the device and fig. 1c shows an enlarged portion of fig. 1b;
- fig. 1d is a front view of a drive unit of the device of fig. 1b;
- fig. 1e is a front view of a hydraulic unit of the device of fig. 1b;
- figs. 2, 3 constitute, with fig. 1b, a simplified schematic representation of a coupling sequence of the drive unit and the hydraulic unit of fig. 1b;
- figs. 4-6 are a simplified schematic representation of a coupling sequence of the support base of fig. 1a with a movement assembly of the device of figs. 1a-b;
- figs. 7-9 are a simplified schematic representation of a decoupling sequence of a drive unit and a hydraulic unit of a second possible embodiment of a device for moving liquids according to the present invention.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

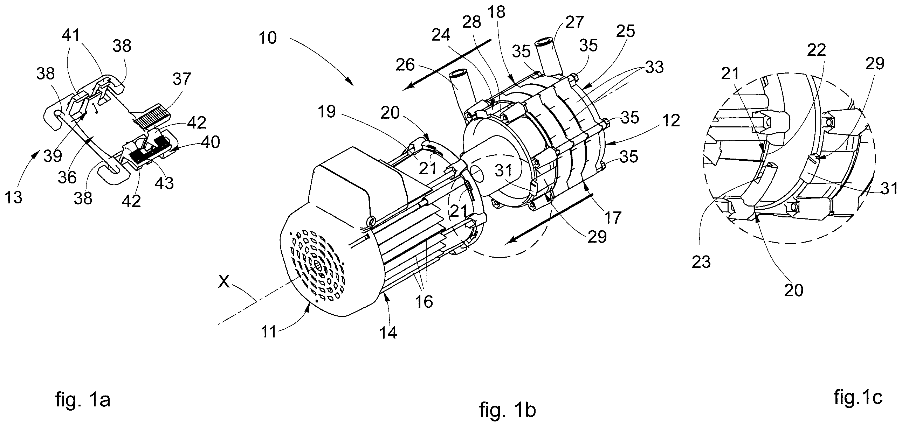

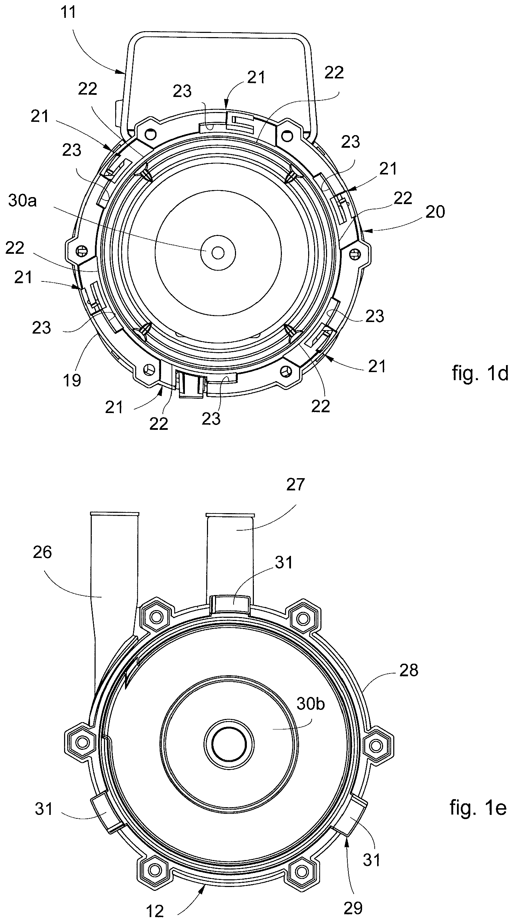

With reference to figs. 1-6, a device 10 for moving liquids according to the present invention is shown embodied as a horizontal centrifugal pumping device for pumping a cooling liquid (for example water, water-glycol, water-oil emulsion or other). Clearly, the same device 10 can be employed to pump other liquids, and not necessarily for cooling purposes.

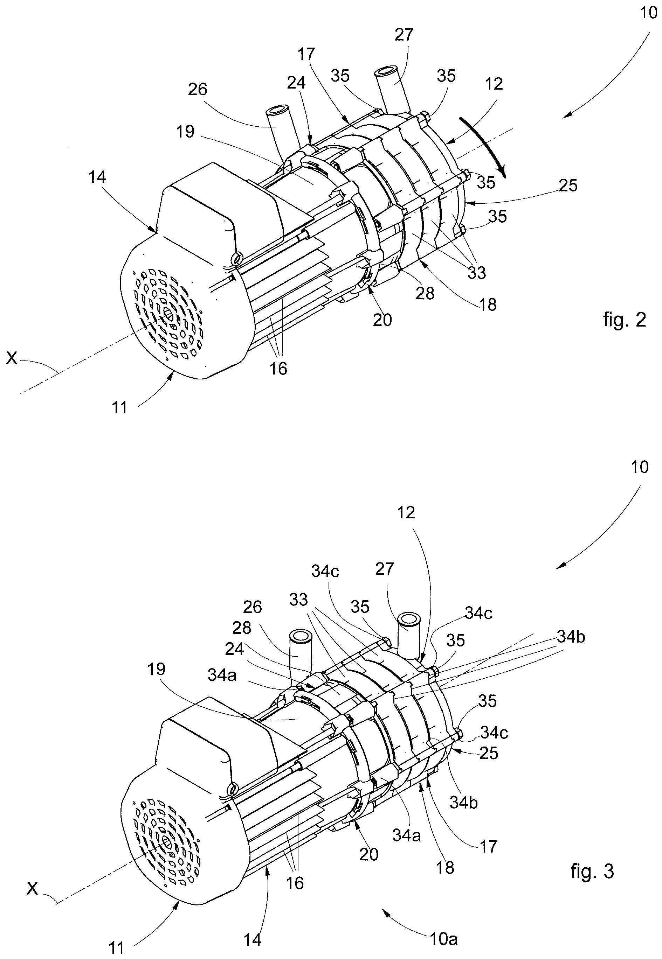

The device 10 comprises a movement assembly 10a (figs. 3-6), which includes a drive unit 11 operatively connected to a hydraulic unit 12.

The drive 11 and hydraulic 12 units comprise respective and mating first 20 and second 29 mechanical coupling means configured to achieve a reciprocal releasable coupling to selectively connect the drive 11 and hydraulic 12 units in a stable manner, forming a movement assembly 10a.

The drive unit 11 is able to generate a rotary motion around a horizontal axis X (figs. 1b, 2, 3). In addition, the drive unit 11 comprises a containing structure 14 able to contain the components of the drive unit 11 and to provide them with a structural support. The containing structure 14 can be equipped in a known manner with cooling fins 16, able to facilitate the cooling of the drive unit 11. Moreover, one or more tie rods 15 can be provided, able to consolidate the coupling of the elements of the containing structure 14.

The device 10 also comprises an assembly for transmitting the motion generated in the drive unit 11 to the hydraulic unit 12.

For example, the device 10 for moving liquids can be a magnetic entrainment centrifugal pumping device. In this case, the motion transmission assembly includes suitable entrainment magnetic means 30a and counter-means 30b (figs. 1b, 1d, 1e) operatively coupled to the drive unit 11 on one side and to at least one movement member of the hydraulic unit 12 on another opposite side.

Alternatively, the transmission of the motion generated in the drive unit 11 to the hydraulic unit 12 could occur mechanically, for example by means of a drive shaft operatively connected to the drive unit 11 on one side and to the at least one movement member of the hydraulic unit 12 on the other side.

According to possible embodiments, the drive unit 11 can be provided, at one end thereof facing the hydraulic unit 12, with a first coupling structure 19 (figs. 1b, 2, 3) configured to house part of the motion transmission assembly, for example at least a portion of the entrainment magnetic means 30a (fig. 1d) or a mechanical transmission system. The first coupling structure 19 can, for example, be bell-shaped, that is, it can provide an annular or substantially cylindrical structure or mantle, such as to define a housing seating to house, as mentioned, part of the motion transmission assembly.

In addition, in some embodiments, the first coupling structure 19 is provided with the first mechanical coupling means 20 for the releasable coupling of the drive unit 11 to the hydraulic unit 12 (figs. 1b-d, 2, 3).

The hydraulic unit 12 is configured to use the rotary motion generated by the drive unit 11 to pump a liquid from a liquid inlet 27 to a liquid outlet 26 thereof (figs. 1b, 1e, 2, 3). The liquid outlet 26 and the liquid inlet 27 are configured to hydraulically connect the hydraulic unit 12 to a suitable hydraulic circuit.

For example, the liquid outlet 26 can be hydraulically connected to a delivery circuit, able to convey the liquid to be moved toward a user device, while the liquid inlet 27 can be hydraulically connected to a return circuit of the liquid to be moved.

The hydraulic unit 12 comprises, at one end thereof facing the first coupling structure 19, a second coupling structure 28 (figs. 1b, 2, 3) configured to house another part of the motion transmission assembly, for example at least a portion of the entrainment magnetic counter-means 30b (fig. 1e) operatively coupled to the entrainment magnetic means 30a at least partly housed in the first coupling structure 19. The second coupling structure 28 can, for example, be mating in shape with the first coupling structure 19.

The hydraulic unit 12 also comprises a hydraulic body 17 (figs. 1b, 2, 3), which delimits and defines inside it a space for pumping the liquid. The hydraulic body 17 comprises, at one end thereof in correspondence with the second coupling structure 28, an outlet block 24, which includes the liquid outlet 26. Moreover, the hydraulic body 17 comprises, at one end thereof opposite the second coupling structure 28, an inlet block 25, which includes the liquid inlet 27. The hydraulic body 17 also comprises a pumping block 18, located between the outlet block 24 and inlet block 25.

Inside the pumping block 18 there is provided at least one movement member, such as an impeller or a turbine, configured to put the liquid to be pumped under pressure by means of the rotary motion generated in the drive unit 11. In addition, in some embodiments, the hydraulic unit 12 is provided with the second mechanical coupling means 29 (figs. 1b, 1c, 1e) in correspondence with the second coupling structure 28.

The first and second mechanical coupling means 20, 29 are conformed mating with each other, so as to allow and achieve the selective mechanical coupling of the drive unit 11 to the hydraulic unit 12, forming the movement assembly 10a (figs. 3-6). In particular, the coupling has to be releasable, stable and sealed, so that the drive unit 11 is protected from the liquid to be moved, and at the same time has to allow the transmission of the motion generated in the drive unit 11 to the hydraulic unit 12.

In the embodiments shown in figs. 1b-e, the first and second mechanical coupling means 20, 29 are bayonet coupling means.

The first mechanical coupling means 20 can be located along an external perimeter part, essentially circular, of the first coupling structure 19. The first mechanical coupling means 20 can be equipped with a plurality of shaped recesses 21 (figs. 1b-d). Preferably, but not necessarily, the shaped recesses 21 are disposed along the external perimeter part of the first coupling structure 19, equally spaced apart from each other.

The second mechanical coupling means 29 can be located along an external perimeter part, essentially circular, of the second coupling structure 28. The second mechanical coupling means 29 can be equipped with a plurality of shaped protrusions 31 (figs. 1b, 1c, 1e).

The number of shaped recesses 21 is at least equal to the number of shaped protrusions 31, or greater. As a non-limiting example, the first mechanical coupling means 20 can comprise six shaped recesses 21, and the second mechanical coupling means 29 can comprise three shaped protrusions 31.

In addition, the shaped protrusions 31 are disposed along the external perimeter part of the second coupling structure 28 in such a way that, when the first coupling structure 19 and the second coupling structure 28 are disposed facing each other, coaxial and with a certain shaped recess 21 facing a certain shaped protrusion 31, every other shaped protrusion 31 is located facing another respective shaped recess 21.

As a non-limiting example, the six shaped recesses 21 are disposed at 60° angular intervals, while the three shaped protrusions 31 are disposed at 120° angular intervals.

Each shaped recess 21 comprises an insertion seating 22 and a locking seating 23 (figs. 1c-d). Each insertion seating 22 is mating in shape with each shaped protrusion 31, so as to allow the entry of the shaped protrusion 31 into the shaped recess 21 only when the shaped protrusion 31 is aligned with the insertion seating 22. The locking seating 23 is conformed in such a way as to prevent the movement of the shaped protrusion 31 along the horizontal axis X, only allowing it to pass from the insertion seating 22 to the locking seating 23, or vice versa, by rotation.

Therefore, the first and second mechanical coupling means 20, 29 are configured to provide a releasable bayonet coupling between the drive unit 11 and the hydraulic unit 12. In other words, in order to couple the drive unit 11 and the hydraulic unit 12, that is, to assemble the movement assembly 10a, the drive unit 11 and the hydraulic unit 12 are moved close to each other along the horizontal axis X (fig. 1b), keeping each shaped protrusion 31 aligned with a corresponding insertion seating 22. Each shaped protrusion 31 is then inserted into the corresponding shaped recess 21 using the respective insertion seating 22 (figs. 1c, 1d). The hydraulic unit 12 is then rotated with respect to the drive unit 11 (fig. 2), in such a way as to make each shaped protrusion 31 rotate in the respective shaped recess 21 from the respective insertion seating 22 to the respective locking seating 23, thus obtaining the assembled movement assembly 10a (fig. 3). Alternatively, it is possible to rotate the drive unit 11 with respect to the hydraulic unit 12, or to rotate both the drive unit 11 as well as the hydraulic unit 12 in opposite directions, provided that each shaped protrusion 31 is made to pass from the respective insertion seating 22 to the respective locking seating 23 by rotation.

To decouple the drive unit 11 and the hydraulic unit 12, that is, to disassemble the movement assembly 10a, the same process is followed, but in the reverse order, that is, making each shaped protrusion 31 pass from the respective locking seating 23 to the respective insertion seating 22 by rotation, and then extracting each shaped protrusion 31 from the respective shaped recess 21 by moving the drive unit 11 and the hydraulic unit 12 away from each other along the horizontal axis X.

Advantageously, the bayonet coupling between the drive unit 11 and the hydraulic unit 12 allows to rapidly assemble or disassemble the movement assembly 10a, in particular by connecting or disconnecting the drive unit 11 and the hydraulic unit 12, without the need for particular technical knowledge regarding the assembly of devices for moving liquids.

Obviously, the bayonet coupling between the drive unit 11 and the hydraulic unit 12 can also be realized in forms that differ from what described heretofore, for example by equipping the drive unit 11 with mechanical coupling means that include shaped protrusions and by equipping the hydraulic unit 12 with mechanical coupling means that include shaped recesses.

In possible embodiments, the pumping block 18 comprises at least one pumping module or stage 33 (figs. 2, 3). In the embodiments in which the pumping block 18 is equipped with only one stage 33, the latter comprises inside it the movement member, a suction aperture and at least one delivery aperture. The suction aperture of the single stage 33 is hydraulically connected to the liquid inlet 27, its movement member is operatively connected to the motion transmission assembly and its delivery aperture, or every one of its delivery apertures, is hydraulically connected to the liquid outlet 26.

The outlet block 24, the pumping block 18 and the inlet block 25 comprise respective first, second and third attachment seatings 34a, 34b and 34c (for simplicity numbered only in fig. 3). The attachment seatings 34a, 34b, 34c are preferably disposed along an external circumference of the respective blocks to which they belong, and are configured to occupy corresponding positions, that is, when the outlet block 24, the pumping block 18 and the inlet block 25 are sequentially positioned along the horizontal axis X to form the hydraulic body 17, the corresponding attachment seatings 34a, 34b and 34c are aligned with each other or coaxial. The hydraulic body 17 is equipped with releasable attachment means 35 (figs. 1b, 2, 3), such as screws or bolts, suitable for insertion into the attachment seatings 34a, 34b, 34c. The attachment means 35 attach the outlet block 24, the inlet block 25 and the pumping block 18 to each other in an assembly configuration, which corresponds to the assembled hydraulic body 17.

Advantageously, the attachment means 35 can be the same as each other, so that a single tool is sufficient to disassemble or assemble the hydraulic body 17, simplifying and speeding up both the first assembly of the device 10, and also any subsequent maintenance.

In the embodiments shown in figs. 1-6, the pumping block 18 comprises, in a known manner, a plurality of stages 33 disposed coaxially along the horizontal axis X. Advantageously, the stages 33 can all be the same as each other, so as to be interchangeable and able to be assembled in any order.

In this case, each stage 33 is equipped with second attachment seatings 34b disposed along a respective external circumference and configured to align with the first and third attachment seatings 34a, 34c and accommodate the attachment means 35.

Each stage 33 also comprises a movement member, a suction aperture and at least one delivery aperture, suitably connected to each other in a known manner to allow the pumping of the liquid to be moved from the liquid inlet 27 to the liquid outlet 26.

In some embodiments, the device 10 can be equipped with a support base 13 (figs. 1a, 4-6) which allows to keep the movement assembly 10a in a stable installation position even when the device 10 is in operation. In particular, the support base 13 can be coupled to the movement assembly 10a as described in detail below.

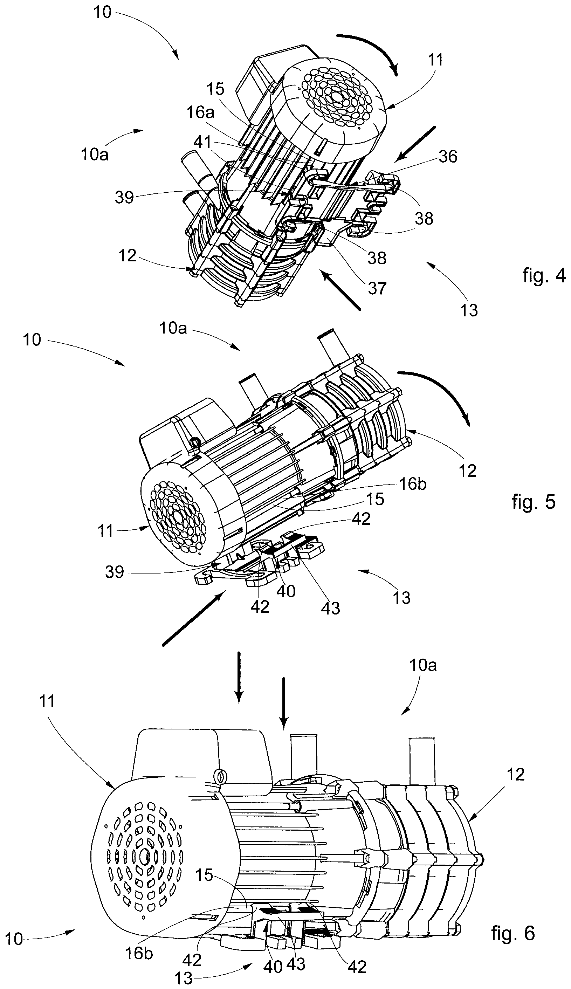

The support base 13 can have an essentially rectangular base body 36, possibly equipped with at least one position stabilizing mean 37, for example stabilizing means conformed as a succession of transverse ribs, conformed as a comb, with successive crests and grooves, or suchlike (figs. 1a, 4), suitably conformed to give the position in which the movement assembly 10a is coupled to the support base 13 additional stability along the horizontal axis X. In other words, the position stabilizing means 37 are configured to allow to stabilize the adjustment of the longitudinal positioning of the movement assembly 10a on the support base 13.

The support base 13 can advantageously be equipped with one or more attachment slots 38, able to accommodate attachment means, preferably releasable, to allow the attachment of the support base 13 to an installation surface.

For example, the support base 13 can comprise four attachment slots 38 in correspondence with its four corners.

In the embodiments shown in figs. 1a, 4-6, the support base 13 also comprises, on one side thereof, positioning means 39 and, on an opposite side thereof, snap-in fastening means 40. The positioning 39 and snap-in fastening 40 means are configured to realize a stable and releasable attachment of the movement assembly 10a in the installation position. In particular, the positioning means 39 are configured to define a correct positioning of the movement assembly 10a, while the snap-in fastening means 40 are configured to stably attach the movement assembly 10a in position in a releasable manner.

In possible embodiments, the positioning means 39 can be conformed as a hook, or an "L", so as to be able to engage a first attachment portion 16a (fig. 4) of the containing structure 14. Preferably, the first attachment portion 16a is located in a lower part of the drive unit 11.

According to possible embodiments, the first attachment portion 16a can be one of the cooling fins 16, the conformation of which can possibly be suitably modified to guarantee an optimal engagement with the positioning means 39, for example providing a suitably shaped profile, for example crook-shaped.

According to other embodiments, the first attachment portion 16a can be a tie rod 15 of the containing structure 14, configured to guarantee an optimal engagement with the positioning means 39, for example also in this case by providing a suitably shaped profile, such as a crook-shaped profile. In this case, the tie rod 15 therefore represents the first attachment portion 16a.

In some embodiments, the positioning means 39 can comprise two inverted L-shaped engagement appendages 41 (figs. 1a, 4), each having a long segment of the "L" perpendicular to the base body 36 and a short segment of the "L" parallel to the base body 36. In this case, the positioning means 39 can engage the first attachment portion 16a when the latter is located below the short segment of the "L" of each engagement appendage 41, thus defining a correct positioning thereof.

The snap-in fastening means 40 (figs. 1a, 5, 6) can be configured to fasten a second attachment portion 16b (figs. 5, 6) of the containing structure 14. Preferably, the second attachment portion 16b is opposing the first attachment portion 16a, that is, it is located in a lower part of the drive unit 11 in a position that is symmetrical, with respect to the horizontal axis X, to the position of the first attachment portion 16a.

According to possible embodiments, the second attachment portion 16b can be one of the cooling fins 16, the conformation of which can possibly be suitably modified to guarantee an optimal fastening with the snap-in fastening means 40, for example by providing a crook-shaped profile.

According to possible embodiments, the second attachment portion 16b can be a tie rod 15 of the containing structure 14, configured to guarantee an optimal engagement with the snap-in fastening means 40, for example by providing a crook-shaped profile.

In particular, the snap-in fastening means 40 (figs. 1a, 5, 6) can be equipped with at least one fastening element 42, for example two fastening elements 42, and with at least one release element 43, configured to fasten and release, respectively, the second attachment portion 16b in a snap-in, or clip, manner. By snap-in or clip fastening we mean that, by pressing the second attachment portion 16b onto the fastening elements 42, the fastening elements 42 are made to spring from a position below the second attachment portion 16b to a position above the second attachment portion 16b, so that the fastening elements 42 fasten the second attachment portion 16b, locking it in position. The release element 43 is instead configured, if pressed, to move each fastening element 42 away from the second attachment portion 16b, thus allowing its release.

In this case, it is possible to attach the movement assembly 10a to the support base 13 by inserting the first attachment portion 16a into the positioning means 39, engaging the engagement appendages 41 (fig. 4). Subsequently, the movement assembly 10a is rotated (fig. 5) so as to press the second attachment portion 16b downward against the fastening element 42, so as to spring the snap-in fastening means 40, fastening the second attachment portion 16b and attaching the drive unit 11 in a horizontal position (fig. 6).

To decouple the movement assembly 10a and the support base 13 when the device 10 is assembled, the same process is followed, but in the reverse order, that is, pressing the release element 43 so as to release the second attachment portion 16b from the snap-in fastening means 40; then rotating the movement assembly 10a so as to move the second attachment portion 16b away from the snap-in fastening means 40; and finally removing the first attachment portion 16a from the positioning means 39.

Obviously, it is possible to install either the movement assembly 10a or just the drive unit 11 on the support base 13. Furthermore, advantageously, it is possible to either uninstall the entire movement assembly 10a from the support base 13, or separate the hydraulic unit 12 from the drive unit 11 and then proceed to remove just the drive unit 11 from the support base 13. Furthermore, it is possible to uninstall the movement assembly 10a from the support base 13 and then proceed to decouple ad separate the drive unit 11 from the hydraulic unit 12.

This offers the advantage of being able to easily disconnect just the drive unit 11 from the remaining parts of the device 10, in particular keeping the hydraulic unit 12 connected to the hydraulic circuit. Consequently, any maintenance or replacement of the drive unit 11 can be carried out without having to disconnect the hydraulic unit 12 from the hydraulic circuit; conversely, if intervening on the hydraulic unit 12, it is possible to disconnect the latter from the hydraulic circuit, leaving the drive unit 11 installed.

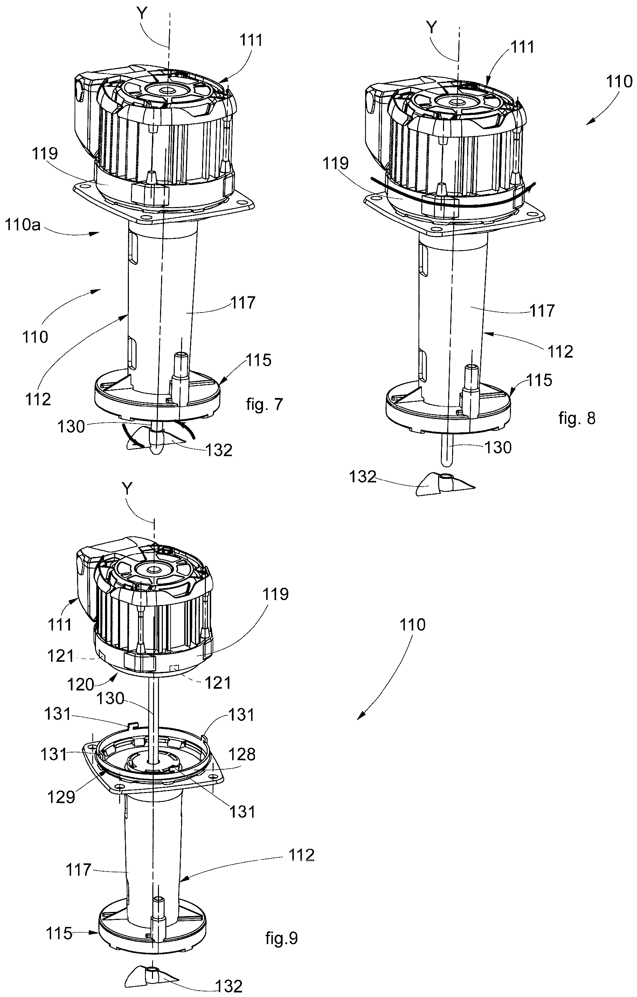

In possible alternative embodiments, shown in figs. 7-9, a device 110 for moving liquids according to the present invention is provided as a semi-immersion vertical centrifugal movement or pumping device for moving a liquid contained in a basin or tank, and possibly for pumping the liquid toward a delivery circuit.

The device 110 comprises a movement assembly 110a (fig. 7) which includes a drive unit 111 operatively connected to a hydraulic unit 112.

In these embodiments, the drive 111 and hydraulic 112 units comprise respective and mating first 120 and second 129 mechanical coupling means configured to achieve a reciprocal releasable coupling to selectively connect the drive 111 and hydraulic 112 units in a stable manner, forming a movement assembly 110a.

The drive unit 111 is able to generate a rotary motion around a vertical axis Y (figs. 7-9). The hydraulic unit 112 is able to use the rotary motion generated by the drive unit 111 to move and/or pump the liquid to be moved. The hydraulic unit 112 is configured to be partly immersed, or semi-immersed, in the liquid's basin or tank, and can possibly be hydraulically connected to a delivery circuit, able to convey the liquid to be moved toward a user device.

The hydraulic unit 112 comprises a movement member 115, such as an impeller or a turbine, and a stem or shank 117. The shank 117 is an oblong element able to sustain the movement member 115.

In some embodiments, the shank 117 develops along the vertical axis Y and the movement member 115 is positioned at a lower end thereof.

The device 110 also comprises an assembly for transmitting the motion generated in the drive unit 111 to the hydraulic unit 112.

For example, the motion transmission assembly can be provided with a drive shaft 130, operatively coupled to the drive unit 111 on one side and at least to the movement member 115 on an opposite other side.

In some embodiments, the drive shaft 130 develops along the vertical axis Y and is configured, in a known manner, to be at least partly inserted inside the shank 117 and make at least the movement member 115 rotate thanks to the motion generated in the drive unit 111.

The hydraulic unit 112 can also be possibly provided with a secondary movement propeller 132. In the non-limiting example embodiment shown in figs. 7-9, the secondary movement propeller 132 is configured to be assembled at an end of the drive shaft 130 opposite the drive unit 111 and protruding from the shank 117, for example by screwing through suitable threads, so that it can in turn be moved by the drive shaft 130.

According to possible embodiments, the drive unit 111 can be provided, at one end thereof facing the hydraulic unit 112, with a first coupling structure 119 configured to house part of the motion transmission assembly, for example a suitable portion of the drive shaft 130.

In addition, the first coupling structure 119 is provided with the first mechanical coupling means 120 for the releasable coupling of the drive unit 111 to the hydraulic unit 112 (fig. 9).

In some embodiments, the hydraulic unit 112 comprises, at one end thereof facing the first coupling structure 119, a second coupling structure 128 configured to house part of the motion transmission assembly, for example a suitable portion of the drive shaft 130.

The hydraulic unit 112 is also provided with the second mechanical coupling means 129 (fig. 9) in correspondence with the second coupling structure 128.

The first and second mechanical coupling means 120, 129 are conformed mating with each other, so as to allow and achieve the selective mechanical coupling of the drive unit 111 to the hydraulic unit 112, forming the movement assembly 110a (fig. 7). In particular, the coupling has to be releasable, stable and sealed, so that the drive unit 111 is protected from the liquid to be moved, and at the same time has to allow the transmission of the motion generated in the drive unit 111 to the hydraulic unit 112.

According to possible embodiments shown in figs. 7-9, the first and second mechanical coupling means 120, 129 are bayonet coupling means.

The first mechanical coupling means 120 can be located along an external perimeter part, essentially circular, of the first coupling structure 119. The first mechanical coupling means 120 can be equipped with a plurality of shaped recesses 121 (fig. 9). The shaped recesses 121 can be disposed along the external perimeter part of the first coupling structure 119, preferably equally spaced apart from each other.

The second mechanical coupling means 129 can be located along an external perimeter part, essentially circular, of the second coupling structure 128. The second mechanical coupling means 129 can be equipped with a plurality of shaped protrusions 131 (fig. 9).

The number of shaped recesses 121 is at least equal to the number of shaped protrusions 131, or greater. As a non-limiting example, the first mechanical coupling means 120 can comprise four shaped recesses 121, and the second mechanical coupling means 129 can comprise four shaped protrusions 131.

In addition, the shaped protrusions 131 are disposed along the external perimeter part of the second coupling structure 128 in such a way that, when the first coupling structure 119 and the second coupling structure 128 are disposed facing each other, coaxial and with a certain shaped recess 121 facing a certain shaped protrusion 131, every other shaped protrusion 131 is located facing another respective shaped recess 121.

As a non-limiting example, the four shaped recesses 121 and the four shaped protrusions 131 are disposed at 90° angular intervals.

According to possible embodiments, each shaped recess 121 comprises an insertion seating and a locking seating, not shown in the attached drawings for brevity but in any case, completely similar to the insertion seating 22 and the locking seating 23, respectively, described above with the aid of figs. 1c-e. In this case, the insertion seating of each shaped recess 121 is mating in shape with each shaped protrusion 131, and the locking seating of each shaped recess 121 is conformed in such a way as to prevent the movement of the shaped protrusion 131 along the vertical axis Y, only allowing it to pass from the insertion seating to the locking seating, or vice versa, by rotation.

Therefore, the first and second mechanical coupling means 120, 129 are configured to provide a releasable bayonet coupling between the drive unit 111 and the hydraulic unit 112, that is, to assemble the movement assembly 110a, in a manner completely similar to what already disclosed for the first and second bayonet mechanical coupling means 20, 29 of the horizontal device 10 for moving liquids with reference to figs. 1-3.

Obviously, the bayonet coupling between the drive unit 111 and the hydraulic unit 112 can also be realized in forms that differ from what described heretofore, for example by equipping the drive unit 111 with mechanical coupling means that include shaped protrusions and by equipping the hydraulic unit 112 with mechanical coupling means that include shaped recesses.

If it is necessary to decouple the drive unit 111 from the hydraulic unit 112, that is, in order to disassemble the movement assembly 110a, the process is to first unscrew the secondary movement propeller 132, if present, (fig. 7) and remove it from the end of the drive shaft 130 (fig. 8); then decouple the first and second mechanical coupling means 120, 129 by suitable rotation (fig. 8); and finally move the drive unit 111 away from the hydraulic unit 112 along the vertical axis Y, in particular by removing the drive shaft 130 from the shank 117 (fig. 9).

To couple the drive unit 111 and the hydraulic unit 112, that is, to assemble the movement assembly 110a, the same process is followed, but in the reverse order, that is, first inserting the drive shaft 130 into the shank 117, moving the drive unit 111 close to the hydraulic unit 112 along the vertical axis Y; then bayonet coupling the first and second mechanical coupling means 120, 129 by suitable rotation; and finally, if present, screwing the secondary movement propeller 132 to the end of the drive shaft 130 opposite the drive unit 111 and protruding from the shank 117.

It is clear that modifications and/or additions of parts may be made to the devices 10, 110 for moving liquids as described heretofore, without thereby departing from the field and scope of the present invention, as defined by the claims.

It is also clear that, although the present invention has been described with reference to some specific examples, a person of skill in the art will be able to achieve other equivalent forms of device for moving liquids, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Horizontal centrifugal pumping device (10) for moving liquids, comprising a movement assembly (10a) comprising a drive unit (11) operatively connected to a hydraulic unit (12, 112) configured to move said liquids, **characterized in that** said drive (11) and hydraulic (12) units comprise respective and mating first (20) and second (29) mechanical coupling means configured to achieve a reciprocal releasable coupling to selectively connect said drive (11) and hydraulic (12) units in a stable manner, forming said movement assembly (10a).

2. Device (10) as in claim 1, **characterized in that** said first (20) and second (29) mechanical coupling means are bayonet coupling means.

3. Device (10) as in claim 2, **characterized in that** the drive unit (11) is provided, at one end thereof facing the hydraulic unit (12), with a first coupling structure (19) and the hydraulic unit (12) comprises, at one end thereof facing the first coupling structure (19), a second coupling structure (28), wherein the first mechanical coupling means (20) are along an external perimeter part, essentially circular, of the first coupling structure (19), wherein said first mechanical coupling means (20) are possibly provided with a plurality of shaped recesses (21) and wherein the second mechanical coupling means (29) are along an external perimeter part, essentially circular, of the second coupling structure (28), wherein said second mechanical coupling means (29) are possibly provided with a plurality of shaped protrusions (31).

4. Device (10) as in claim 1, 2 or 3, **characterized in that** it comprises a support base (13) configured to keep said movement assembly (10a) in a stable installation position.

5. Device (10) as in claim 4, **characterized in that** said support base (13) has an essentially rectangular base body (36), possibly equipped with at least one position stabilizing mean (37), in particular conformed as a succession of transverse ribs, conformed as a comb, with successive crests and grooves, suitably conformed to confer stability, along a horizontal axis (X), to the coupling position of the movement assembly (10a) to the support base (13), stabilizing the adjustment of the longitudinal positioning of the movement assembly (10a) on the support base (13).

6. Device (10) as in claim 4 or 5, **characterized in that** said support base (13) is provided with one or more attachment slots (38), able to accommodate attachment means, preferably releasable, to allow the attachment of the support base (13) to an installation surface.

7. Device (10) as in claim 5 or 6, **characterized in that** said support base (13) comprises, on respective opposite sides thereof, positioning means (39) and snap-in fastening means (40) configured to create a stable and releasable attachment of said movement assembly (10a) in said installation position, wherein said positioning means (39) are configured to engage a first attachment portion (16a) of said drive unit (11) and said snap-in fastening means (40) are configured to fasten in a snap-in manner an opposing second attachment portion (16b) of said drive unit (11).

8. Device (10) as in claim 7, **characterized in that** the drive unit (11) comprises a containing structure (14) provided with cooling fins (16) and/or one or more tie rods (15) able to consolidate the coupling of the elements of the containing structure (14), wherein said containing structure (14) has said first attachment portion (16a), in particular said first attachment portion (16a) is in a lower part of the drive unit (11).

9. Device (10) as in claim 8, **characterized in that** said positioning means (39) are conformed as a hook, or an "L", so as to be able to engage the first attachment portion (16a) of said containing structure (14) of said drive unit (11).

10. Device (10) as in claim 8 or 9, **characterized in that** the first attachment portion (16a) is one of the cooling fins (16), or it is a tie rod (15) of the containing structure (14).

11. Device (10) as in any claim from 7 to 10 when dependent on claim 5, **characterized in that** said positioning means (39) comprise two inverted L-shaped engagement appendages (41), each having a long segment of the "L" perpendicular to the base body (36) and a short segment of the "L" parallel to the base body (36), so that said positioning means (39) engage the first attachment portion (16a) when the latter is located below the short segment of the "L" of each engagement appendage (41).

12. Device (10) as in any claim from 8 to 11, **characterized in that** said snap-in fastening means (40) are configured to fasten said second attachment portion (16b) of the containing structure (14), said second attachment portion (16b) being opposing the first attachment portion (16a), that is, being located in a lower part of the drive unit (11) in a position symmetrical, with respect to the horizontal axis (X), to the position of the first attachment portion (16a), wherein said snap-in fastening means (40) are possibly provided with at least one fastening element (42) and with at least one release element (43), respectively configured to fasten and release the second attachment portion (16b) in a snap-in manner, wherein pressing the second attachment portion (16b) onto the fastening elements (42) causes the fastening elements (42) to spring from a position below the second attachment portion (16b) to a position above the second attachment portion (16b), so that the fastening elements (42) fasten the second attachment portion (16b) locking it in position, and wherein the release element (43) is possibly configured, when pressed, to move each fastening element (42) away from the second attachment portion (16b), thus allowing its release.

13. Device (10) as in claim 8 or as in any claim from 9 to 12 when dependent on claim 8, **characterized in that** the second attachment portion (16b) is one of the cooling fins (16) or the second attachment portion (16b) is a tie rod (15) of the containing structure (14).

14. Device (10) as in any claim hereinbefore, **characterized in that** said hydraulic unit (12) comprises outlet (24), pumping (18) and inlet (25) blocks attached to each other in an assembly configuration by means of releasable attachment means (35), said pumping block (18) comprising one or more pumping stages (33).

15. Device (10) as in any claim hereinbefore, **characterized in that** it is a magnetic entrainment centrifugal pumping device, comprising a motion transmission assembly which includes entrainment magnetic means and counter-means (30a, 30b) which are operatively coupled to said drive unit (11) on one side and to a movement member of said hydraulic unit (12) on an opposite other side.
